Europäisches Patentamt

European Patent Office

Office européen des brevets

(19)

(11) Numéro de publication: **0 493 851 A1**

(12) # DEMANDE DE BREVET EUROPEEN

(21) Numéro de dépôt: **91203309.9**

(22) Date de dépôt: **16.12.91**

(51) Int. Cl.5: **H02G 1/08**

(30) Priorité: **02.01.91 BE 9100001**

(43) Date de publication de la demande:
**08.07.92 Bulletin 92/28**

(84) Etats contractants désignés:
**CH DE ES FR GB IT LI LU NL**

(71) Demandeur: **Kerckhove, Jose Vande**
**Pastoor Deswaeflaan 9**
**B-9990 Maldegem(BE)**

(72) Inventeur: **Kerckhove, Jose Vande**
**Pastoor Deswaeflaan 9**
**B-9990 Maldegem(BE)**

(74) Mandataire: **Dopchie, Jean-Marc**
**KORTRIJKS OCTROOI- EN MERKENBUREAU -**
**K.O.B. Kennedypark 21c**
**B-8500 Kortrijk(BE)**

(54) **Dispositif pour l'introduction de câbles conducteurs dans des tubes installés, et procédé utilisant un tel dispositif.**

(57) Dispositif pour introduire un ou plusieurs câbles dans un tube, composé d'une part d'un pilier butant (1) télescopique pouvant être bloqué à la longueur souhaitée par une borne d'assemblage (4), composé d'une pièce annulaire (6) qui positionée avec un faible jeu autour de la partie télescopique (2) peut empêcher son déplacement en prenant une position oblique, et d'autre part d'un dispositif de traction (17) pourvu d'au moins une paire de rouleaux, engrenages ou moyens semblables (23, 32) et (23', 33) rotatifs montés l'un au-dessus de l'autre, entre lesquels il est possible de serrer un moyen de traction (39) - s'étendant linéairement - et dont au moins un de ces rouleaux engrenages peut être actionné par un moteur à l'aide d'une commande à distance pour tirer le moyen de traction à travers le dispositif de traction (17), alors que ce dispositif de traction (17) est attaché au pilier butant (1).

FIG. 2

FIG 7b

L'installation des distributions d'énergie électrique dans un bâtiment nécessite le placement de beaucoup de conducteurs. Pour des raisons de sécurité, il est prescrit dans les réglementations relatives aux installations électriques de placer les câbles de canalisation d'une installation électrique dans des tubes de PVC ou de métal. Plusieurs câbles suivant le même trajet se trouvent alors dans le même tube. Principalement pour des raisons esthétiques, ces tubes sont le plus souvent placés dans des murs ou par exemple dans le vide au-dessus d'un faux plafond, ou cachés d'une autre manière.

Lors du câblage d'un bâtiment, tous les tubes sont d'abord installés à leur place définitieve. Chaque tube s'étend entre deux points où une liaison électrique doit être réalisée. Par conséquent, il faut veiller à ce que tout tube - en particulier ceux installée, par exemple, dans une cloison - soit accessible des deux bouts, d'une part, afin d'y introduire les câbles, d'autre part, afin de réaliser les liaisons électriques mentionnées. Ensuite, le nombre de câbles nécessaires au fonctionnement et à la conduite de l'installation est placé dans chaque tube. Enfin, tous les accessoires de l'installation électrique (interrupteurs, prises de courant, appareils) sont reliés aux câbles et placés ou fixés dans l'habitation.

Pour l'introduction des câbles conducteurs dans les tubes, il faut deux personnes, selon un premier procédé souvent appliqué. Chaque personne se met au bout d'un tube à câbles. Une personne y pousse un fil métallique ou un ressort de traction plus long que le tube jusqu'à ce qu'il sorte à l'autre bout. Le câble conducteur qui doit être introduit dans le tube est évidemment plus long que ce dernier. Il est fixé à un bout du fil métallique ou du ressort de traction.

La personne se trouvant à l'autre bout du tube va maintenant tirer à ce fil métallique ou ressort de traction, de sorte que le câble conducteur qui y est attaché pénètre dans le tube. Entre-temps, le câble de canalisation est enfoncé et guidé dans le tube par la personne à l'entrée. Lors de ces travaux, il est important que les deux personnes synchronisent respectivement leurs mouvements de traction et de pression. La synchronisation est le plus souvent réalisée en criant. Le travail est terminé lorsque le câble conducteur apparaît à un bout chez la personne qui tire le fil métallique ou ressort de traction, pendant que l'autre bout du câble déborde encore de l'autre côté du tube. Souvent, de cette façon, plus d'un câble conducteur est tiré en même temps dans un tube.

Un premier désavantage de ce procédé est le fait qu'il faut deux personnes pour exécuter le travil. D'une part, les frais de réalisation de l'installation électrique en sont influencés. D'autre part, des personnes travaillant d'habitude indépendamment doivent collaborer avec quelqu'un d'autre pour cette partie des travaux.

Un autre désavantage de ce mode de travail consiste en le fait que les deux personnes sont souvent très éloignées l'une de l'autre, ou séparées par une ou plusieurs cloisons, étant donné que les bouts d'un même tube se trouvent dans une autre chambre ou à un autre étage du bâtiment. Si les deux personnes ne peuvent plus communiquer - à cause de la distance et/ou des cloisons - il est impossible de synchroniser la traction et la pression au câble de canalisation et les travaux n'avancent pas. En effet, le manque de synchronisation peut entraîner une rupture du fil métallique ou des déformations locales au câble, de sorte que ce dernier est coincé dans le tube et/ou empêche le pasage d'autres câbles. Tout ceci exerce une influence négative sur la durée, et donc sur les frais de travail.

Un dispositif est connu, qui permet à une seule personne d'exécuter les travaux susnommés. Ce dispositif est décrit dans le brevet FR-2 537 795. Il consiste en un pilier butant auquel un mécanisme de traction est attaché. Après l'introduction d'un fil métallique dans le tube, un câble de canalisation est relié à un bout du fil; alors que l'autre bout du fil est lui-même relié au mécanisme de traction. La personne qui se trouve à l'entrée du tuyau pour y enfoncer le câble peut brancher ou débrancher le mécanisme de traction à l'aide d'une commande à distance. Le mécanisme enroule le fil de métal. Des moyens de détection sont présents, ils arrêtent le mécanisme au moment où le bout du câble sort du tube.

Un premier désavantage de ce dispositif est que le mécanisme de traction se compose principalement d'un dispositif d'enroulement. Ainsi, le mécanisme ne peut être utilisé qu'avec un fil de métal comme moyen de traction. Toutefois, on préfère souvent un ressort de traction plutôt qu'un fil métallique, puisqu'un ressort se déplace mieux dans le tube e.a. si le tube a plusieurs courbes.

Un autre désavantage est qu'après avoir terminé le travail - lorsque le câble de canalisation est tiré dans le tube - le fil métallique est tout à fait enroulé et ne peut plus être utilisé. Il doit être soit jeté (désavantage économique), soit déroulé (perte de temps).

Un autre désavantage du dispositif décrit ci-dessus est le fait que le mécanisme de traction est monté sur un pilier butant télescopique qu'il faut ajuster entre ses deux points d'appui. Cela se fait en premier lieu, en bloquant les deux parties télescopiques par un tenon rentré via les ouvertures respectives dans les deux parties; ensuite, en réglant la hauteur du pilier jusqu'à ce que celui-ci soit coincé entre les points d'appui au moyen de deux pièces d'appui, l'une qui s'appuie sur le sol, tourne sur du filetage et est ajustable dans la hauteur, l'autre tournant sur un filetage au niveau supérieur du pilier jusqu'au plafond et réglable dans la hauteur. Cette façon de fixer le pilier butant est assez compliquée pour une appareil qui doit être régulièrement déplacé afin de câbler les différents tubes. Il s'en suit également une perte de temps importante.

L'objectif de l'invention est de remédier aux désavantages énumérés ci-dessus relatifs au dispositif existant, tout en retenant ses avantages, en particulier l'emploi du dispositif par une seule personne.

L'objet de l'invention est un dispositif pour introduire des câbles dans un tube, plus particulièrement un ou plusieurs conducteurs dans un tube placé dans un bâtiment. Ce dispositif selon l'invention consiste, d'une part, en un pilier butant à partie télescopique qui peut être facilement et rapidement fixé au moyen d'une borne d'assemblage, et d'autre part, d'un mécanisme de traction, attaché à ce pilier et ajustable dans la hauteur, pour un ressort de traction. La borne d'assemblage du pilier butant se compose principalement d'un anneau situé autour de la partie télescopique. En fixant ce pilier à la bonne hauteur, de façon qu'il soit serré, par exemple, entre le sol et le plafond, l'anneau se met de bliais à l'égard de l'axe longitudinal de la partie téléscopique, ainsi les bords intérieurs de l'anneau s'appuient sur cette partie téléscopique. Pour adopter cette position oblique, l'anneau se trouve dans un vide situé dans la partie du pilier butant qui s'appuie sur le sol. D'un côté de l'anneau, une partie en saillie est prévue, laquelle déborde du manteau du vide nommé. Un élément de commande est relié au manteau de ce vide, de sorte que ce manteau peut être descendu et ensuite remonté par la force élastique. En remontant le manteau par des forces élastiques, l'anneau se met de biais à l'égard de l'axe longitudinal de la partie téléscopique, puisque seul ce côté de l'anneau débordant le manteau avec la partie saillante, est remonté. Le côté opposé de l'anneau s'appuie plus bas sur la partie télescopique du pilier butant et pousse cette partie télescopique encore plus haut, lors du mouvement vertical du manteau, vu que l'anneau en biais dans le vide est entraîné vers le haut. Ainsi, le pilier butant est encore mieux serré entre ses deux points d'appui. L'ouverture de l'anneau se trouve maintenant dans une surface non perpendiculaire à l'axe longitudinal de la partie téléscopique du pilier. Ce pilier reste bloqué dans cette position allongée, serré entre les deux points d'appui. Pour le détacher, la partie en saillie de l'anneau est poussée vers le bas, alors que le manteau, ou la partie mobile qui lui est solidaire, pousse vers le bas à l'encontre des forces élastiques. L'anneau se met perpendiculairement à l'axe longitudinal de la partie télescopique du pilier butant, celui-ci peut alors être déplacé librement dans l'ouverture de l'anneau.

Sur le pilier butant, un appareil de traction est placé avec les moyens connus ajustables dans la hauteur. Ces moyens permettent de haler le ressort de traction dans les deux directions.

En même temps le ressort de traction est serré entre des rouleaux tournants dont au moins un est actionné par un moteur. Une commande à distance permet de brancher ou de débrancher le moteur.

Des moyens supplémentaires réglables dans la hauteur peuvent encore être installés sur le pilier butant afin de l'appuyer et/ou de fixer un bout de tube à l'égard de ce pilier, etc... .

Un autre objet de l'invention est le procédé d'introduction des câbles dans le tube, plus particulièrement d'un ou plusieurs conducteurs dans un tube placé dans un bâtiment, en employant le dispositif selon l'invention. Le dispositif selon l'invention est installé près de l'extrémité du tube à câbles.

Le pilier butant, équipé de l'appareil de traction, est monté à demeure. Le ressort de traction est placé entre les rouleaux, son bout libre est introduit dans l'entrée du tube, soit par un tube creux flexible, soit directement. Les rouleaux sont actionnés dans un sens de sorte que le ressort de traction est progressivement, puis de manière continue, enfoncé dans le tube. Lorsque le ressort de traction atteint l'autre bout du tube, l'actionnement des rouleaux est arrêté. Alors, le câble à introduire dans le tube est relié de ce côté. Les rouleaux sont réactivés dans l'autre sens, de sorte que le ressort de traction est retiré du tube du côté de l'appareil et, le câble est tiré dans le tube. Ce travail peut s'effectuer pendant que la personne qui exécute le travail, se trouve du côté du tube où le câble entre, notamment pour l'enforcer et le guider, puisqu'il peut activer le mécanisme de traction par une commande à distance. Un dispositif de détection peut arrêter le moteur au moment où le câble sort du tube près du mécanisme de traction.

Un premier avantage du dispositif et du mode de travail selon l'invention est qu'une seule personne peut effectuer le travail, alors que le ressort de traction est quand même utilisé. L'introduction dans le tube du moyen de traction, de préférence un ressort de traction, se passe également automatiquement par le mécanisme actionné par l'électricité. Ceci était impossible avec le dispositif connu.

Un deuxième avantage est qu'on ne perd pas de temps en déroulant le moyen de traction, comme c'était le cas pour le dispositif connu.

Encore un avantage de l'invention est le montage facile et rapide du pilier butant de l'appareil selon l'invention, favorisant une exécution rapide des travaux.

Les autres caractéristiques et avantages du dispositif et du procédé selon l'invention s'avéreront de la description ci-après d'un procédé préférentiel et d'une exé&cution détaillée du dispositif, sans que l'invention soit limitée à ce procédé ou à cette exécution préférentiels. Cette description est illustrée par les figures en annexe, où:

Figure 1 - représente une vue latérale du pilier butant du dispositif selon l'invention.

Figure 2 - représente une coupe longitudinale du pilier butant du dispositif selon l'invention.

Figures 3a et 3b - représentent une coupe longitudinale de la borne d'assemblage du pilier butant des figures 1 et 2 respectivement dans la position qui permet de déplacer la partie télescopique et dans celle qui la bloque.

Figure 4 - représente un dessin perspectif d'une potence pouvant être attachée au pilier butant, ajustable en hauteur.

Figure 5 - représente un dessin perspectif d'un étau de fixation qui peut être attaché, ajustable en hauteur, au pilier butant afin de supporter l'appareil de traction.

Figure 6 - représente une vue en plan d'un support pour tubes pouvant être attaché, de façon réglable, au pilier butant.

Figure 7a - représente un dessin perspectif de la boîte contenant le moteur électrique de l'appareil de traction selon l'invention.

Figure 7b - représente un dessin perspectif de l'ensemble de l'appareil de traction selon l'invention.

Figure 8 - représente une coupe longitudinale du mécanisme de traction de l'appareil de traction selon l'invention.

Figure 9 - représente une coupe transversale du mécanisme de traction de l'appareil de traction selon l'invention, suivant l'axe AA' de la figure 8.

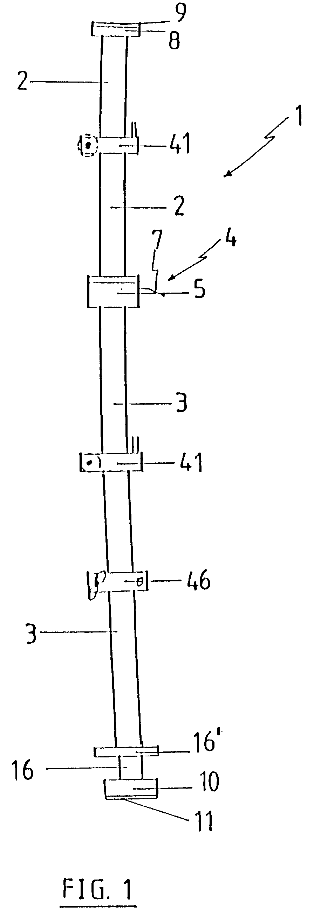

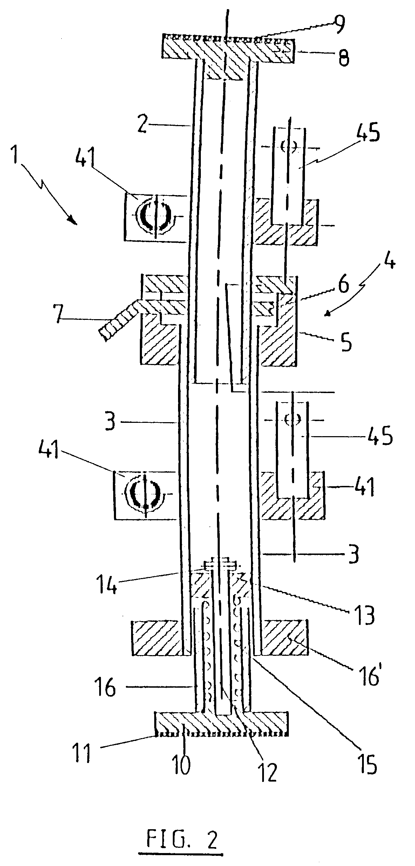

Le dispositif selon l'invention est composé, d'une part, d'un pilier butant (voir figures 1 et 2). Ce pilier (1) consiste principalement en deux pièces tubulaires (2) et (3) à longueurs considérables en proportion de leurs diamètres respectifs. La pièce tubulaire supérieure (2) a un diamètre extérieur plus petit que le diamètre intérieur de la pièce tubulaire inférieure.

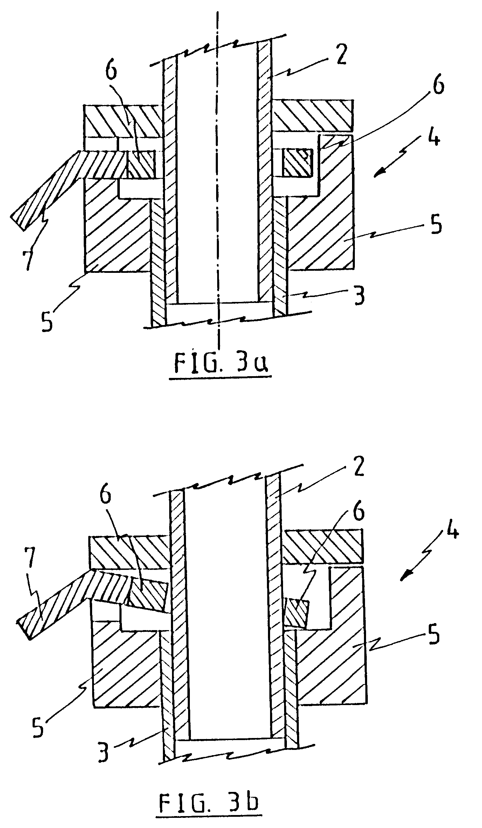

La pièce tubulaire supérieure (2) est rentrée dans la pièce tubulaire inférieure sur une distance réglable. De cette façon, les deux pièces tubulaires (2) et (3) situés dans le prolongement réciproque forment un ensemble à longueur variable par le fait que la pièce (2) sort plus ou moins de la pièce (3). En montant le pilier butant (1), celui-ci doit être ajusté à demeure à la longueur nécessaire. Par conséquent, il faut que le déplacement de la pièce supérieure (2) dans la pièce inférieure (3) puisse être empêché en ajustant à demeure les deux pièces (2) et (3) l'une à l'égard de l'autre. Cela se fait à l'aide de la borne d'assemblage (4). Cette borne (4) (figures 2, 3a et 3b) consiste en un cylindre creux (5) fixé autour du bout supérieur de la pièce tubulaire inférieure (3). Cette pièce (3) est située au milieu du côté circulaire inférieur du cylindre creux (5), y est fixée et débouche dans le vide intérieur du cylindre (5).

Dans le côté circulaire supérieur du cylindre creux (5), il est prévu une ouverture centrale où la pièce tubulaire supérieure (2) du pilier butant (1) peut se déplacer. Cette ouverture débouche également dans le vide intérieur du cylindre (5) et a une ligne axiale verticale coïncidant avec celle de la pièce tubulaire (3) pénétrant par la partie inférieure et débouchant dans le vide intérieur du cylindre (5). La pièce tubulaire supérieure (2) du pilier butant (1) est entrée, via l'ouverture dans le côté supérieur du cylindre (5), jusqu'à la pièce tubulaire inférieure (3). La pièce tubulaire supérieure (2) se déplace librement de bas en haut dans la pièce tubulaire inférieure (3) à travers le cylindre creux (5). Dans le vide intérieur du cylindre (5), et autour de la pièce tubulaire supérieure (2) traversant le vide suivant la ligne axiale, il y a un anneau (6) avec un certain jeu. Cet anneau (6) a sur le côté une excroissance qui passe au travers d'une échancrure prévue à cet effet dans la joue du cylindre (5) et se termine par une lèvre (7) orientée vers le bas.

La partie tubulaire supérieure (2) est équipée au bout supérieur d'une pièce d'appui (8) cylindrique à diamètre plus grand que la pièce (2). Le côté supérieur plat de la pièce d'appui (8) est couvert d'une semelle (19) en caoutchouc ou autre matière à grande résistance au frottement.

Au côté inférieur du pilier butant (1), il y a également une pièce d'appui (10) semblable couverte en dessous d'une semelle (11) en caoutchouc ou matière semblable.

Contrairement à la pièce d'appui supérieure (8), la pièce d'appui (10) n'est pas directement reliée au bas de la pièce tubulaire inférieure (3) (voir figure 2). Au milieu, au-dessus de la pièce d'appui (10), il y a verticalement un petit tube (12) à faible diamètre. Ce tube (12) traverse une partie annulaire (13) fixée à l'intérieur de la pièce tubulaire inférieure (3) transversalement à la ligne axiale, attenant aux cloisons intérieures, et qui fait monter le tube (12) à travers une ouverture centrale avec un certain jeu qui permet le glissement aisé de la partie (13) - et donc de la pièce tubulaire (3) - à l'égard du tube (12). Au-dessus de la partie annulaire (13), le petit tube (12) possède à son extrémité une goupille d'arrêt (14) plus grande que l'ouverture de la partie annulaire (13) afin d'empêcher que la partie annulaire (13) ne glisse du tube (12).

Autour du tube (12), il y a un ressort à boudin (15) qui repose en bas sur la pièce d'appui (10) et en haut sur la partie annulaire (13). Autour de ce ressort à boudin (15), il y a un tube (16) - également émanant de la pièce d'appui (10) et s'étendant verticalement sur une hauteur plus petite que celle du ressort à boudin (15) en détente.

Le diamètre extérieur du tube (16) est plus petit que le diamètre intérieur de la partie tubulaire inférieure (3) du pilier butant (1).

La partie inférieure de la pièce tubulaire (3) se trouve autour du tube (16). Par conséquent, le ressort à boudin (15), en détente, peut dépasser le bord supérieur du tube (16) d'une distance plus petite que celle entre le côté inférieur de la partie annulaire (13) et celui de la pièce tubulaire (3). Cette distance doit également être plus petite que la hauteur du tube (16) pour empêcher que le côté inférieur de la pièce tubulaire (3) n'heurte, la pièce d'apui (10) en cas d'enfoncement maximal du ressort à boudin (15).

Afin de permettre que la pièce tubulaire inférieure (3) du pilier butant (1) soit du pied poussée vers le bas à l'encontre des forces élastiques, le bord inférieur de cette pièce tubulaire (3) a un élargissement cylindrique horizontal (16').

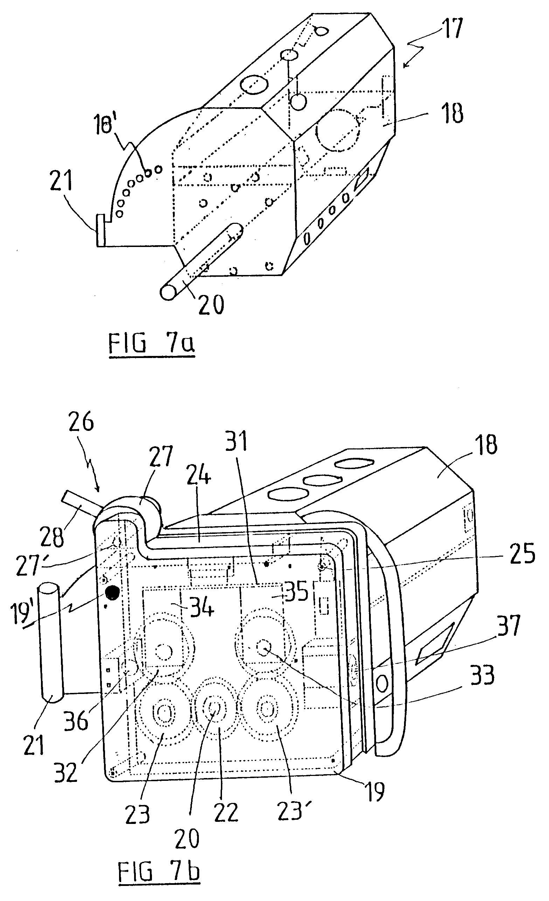

Le dispositif selon l'invention se compose d'autre part d'un appareil de traction actionné à l'électricité (17) (voir figures 7a, 7b, 8 et 9). Cet appareil est employé, soit pour pousser le ressort de traction (39) dans les tubes, soit pour l'en tirer en même temps que les câbles de canalisation y relies. Cet appareil (17) est équipé de façon à être attaché au pilier butant (1) près du tube à câbler. Là où il est impossible de placer un pilier butant, l'appareil peut aussi être attaché aux parties solides du bâtiment par les moyens de fixation prévus à cette fin. L'emploi, les caractéristiques et la composition s'avéreront de la description détaillée qui suit. L'appareil de traction (17) est composé de deux boîtes séparées (18) et (19). La boite (18) contient un moteur actionné à l'électricité et pourvu des circuits électriques et/ou électroniques nécessaires à sa commande. La commande se fai, soit au moyen de boutons poussoirs, soit par une commande à distance. De préférence, il y a un bouton poussoir pour brancher le moteur progressivement. Une série de lampes témoins sont prévues qui permettent un contrôle visuel du fonctionnement ou de l'arrêt du moteur. Les moyens de protection nécessaires au moteur sont également présents, tels que par exemple une protection thermique ou des fusibles. Aussi bien les boutons poussoirs que les lampes témoins sont placés sur la cloison extérieure de la boîte (18). L'antenne de la commande à distance sort de la cloison extérieure de la boîte (18).

Le moteur actionne directement ou par les moyens de transmission connus un axe (20) qui sort d'un côté de la boîte (18). Ce côté de la boîte (18) s'étend latéralement est pourvu au bord extrème d'un manchon vertical (21) ouvert aux deux bouts. Ce manchon (21) sert à être glissé sur un tenon, ajustable dans la hauteur et relié au pilier butant (1) ou à une autre construction fixe. Le tenon est pourvu des éléments pouvant empêcher le manchon (21) de se déplacer vers le haut, dès que celui-ci est glissé sur le tenon. Ainsi, l'appareil de traction (17) est suspendu à la hauteur souhaitée du tube à câbler.

La boîte (19) comprend le mécanisme de traction actionné par le moteur de la boîte (18). La boîte (19) est installée à courte distance de la boîte (18), parallèle au côté d'où sort l'axe (20) du moteur. Cet axe (20) s'étend à travers le côté de la boîte (19) et forme le seul lien mécanique entre les boîtes (18) et (19). La boîte (19) est encore attachée à un élément du coussinet de l'axe (20). Cet élément peut être tourné par rapport à un autre élément du coussinet de l'axe (20), attaché à la boîte (18). Ainsi, il est possible de placer la boîte (19) dans n'importe quelle position tournée autour de l'axe (20) par rapport à la boîte (18), et de déterminer la direction de traction du ressort de traction (39). En employant l'appareil, la boîte (19) doit être ajustée dans une position fixe à l'égard de la boîte (18) afin d'éviter que cette boîte (19) tourne arbitrairement à l'égard de la boîte (18) par les forces de réaction. Pour cet ajustage à demeure de la boîte (18), il est pris soin que le ressort de traction (39) puisse s'étendre le plus possible dans le prolongement du tube à câbler entre la sortie du tube et l'appareil de traction (17). L'ajustage fixe de la boîte (19) à l'égard de la boîte (18) se fait au moyen d'une broche de blocage (19') qui traverse la boîte (19) et débouche du côté de la boîte (18). Cette broche de blocage (19') a un tenon entrant dans une des ouvertures (18') prévues dans le côté de la boîte (18). Chacune de ces ouvertures - disposées sur un arc de cercle - permet de fixer la boîte (19) dans une certaine position en y plaçant la broche de blocage (19'). A l'extrémité de l'axe (20) dans la boîte (19), il y a un pignon (22). Les engrenages à traction (23) et (23') collaborant avec le pignon (22) se trouvent à la même hauteur, parallèles aux axes situés des deux côtés de l'axe (20) dans la boîte (19).

Le côté supérieur de la boîte (19) comprend un couvercle (24) qui sur une petite distance peut trourner vers le haut autour d'un axe (25). Ce couvercle (24) est apposé sur la boîte (19) avec un dispositif (26) composé d'un cylindre (27). Ce dernier est équipé d'une poignée (28), tournant autour d'un axe et placé excentriquement. Lorsque la poignée (28) est orientée vers le bas, le cylindre (27) se trouve dans la position la plus basse à l'égard de son axe excentrique (27'). Dans cette position, le couvercle (245) s'appuie sur la boîte (19). Au dessous du couvercle (24), il y a un ressort à torsion (non représenté) qui presse sur le dessous du couvercle (24).

Lorsque la poignée (28) est montée, le cylindre (27) tourne autour de l'axe excentrique (27'). Ce cylindre (27) se met donc plus haut que cet axe (27') et le couvercle (24) est soulevé par le ressort à torsion.

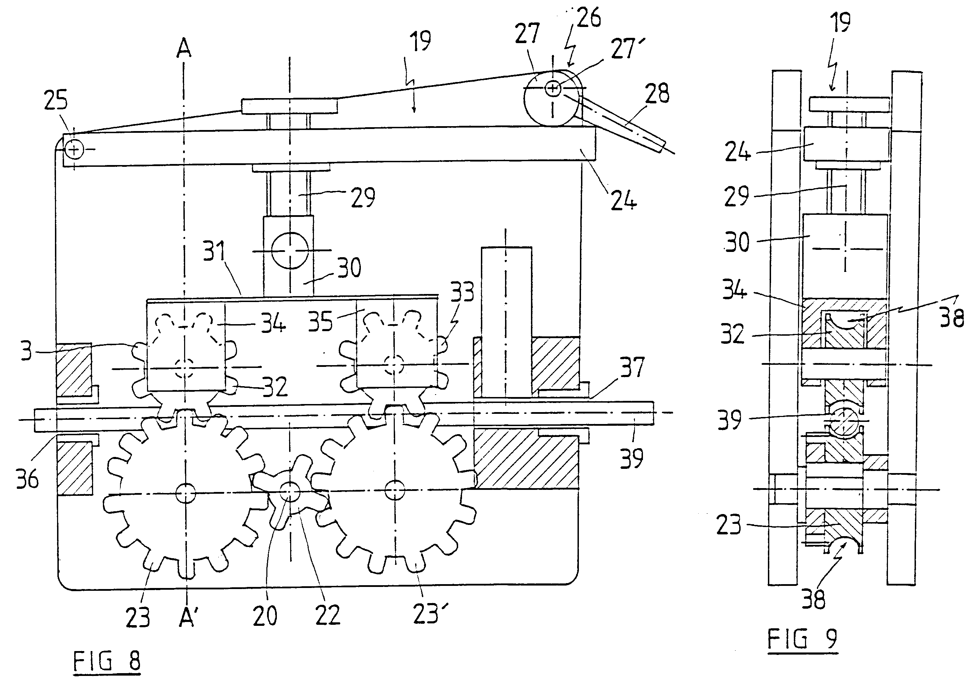

Au dessous du milieu du couvercle (24) est fixé un cylincre vertical (29) (voir figures 8 et 9) glissé à l'intérieur d'un tube vertical (30). Dans ce tube vertical (30) se trouve un ressort à spirale (non représenté). Le cylindre (29) comprime ce ressort à spirale placé dans le tube (30). Le tube (30) est fixé verticalement au milieu d'un ressort à lames (31) qui s'étend horizontalement. D'après une autre exécution préférée de l'invention, le cylindre (29) et le tube (30) - avec le ressort à spirale - sont remplacés par un autre dispositif non élastique supportant le dessous du ressort à lames horziontal (31), comme par exemple une pièce en forme de poutre, fixée verticalement au couvercle (24) sur une pièce profilée en forme de U supportant le dessous du ressort à lames horizontal (31). Au dessous du ressort à lames horizontal (31) sont attachés deux engrenages à pression (32) et (33) tournant sur des axes s'étendant respectivement verticalement et parallèlement au-dessus des axes des engrenges à traction (23) et (23'). Ces axes sont fixés dans des profilés en forme de U (34) et (35) servant de support.

Les côtés de la boite (19), parallèles aux axes des engrenages (22), (23), (23'), (32), (33), sont pourvus d'ouvertures (36), (37) dans le prolongement du côté supérieur des engrenages à traction (23) et (23').

Les engrenages (22), (23), (23'), (32), (33), sont équipés sur le pourtour de dents. A travers les dents et plus enfoncée dans la surface cylindrique duquel sortent ces dents, il y a une cannelure en forme de U (38) qui s'étend sur tout le pourtour des engrenages. De la même façon, l'engrenage (22) possède une cannelure en forme de U (38').

Le point le plus profond des cannelures (38) et (38') est situé, sur tout le pourtour de l'engrenage, sur un cercle dont le centre coïncide avec celui de l'engrenage, alors que les cannelures (38) et (38') sont symétriques à l'égard des côtés latéraux de l'engrenage, et plus étroites que la largeur des dents.

Une dent sur ces engrenages se compose donc de deux parties, séparées par une cannelure (38) ou (38'). Là où le pourtour de l'engrenage est dépourvu de dents, la partie inférieure de la cannelure (38) ou (38') se trouve dans la surface cylindrique de l'engrenage.

En employant l'appareil de traction (17), un ressort de traction (39) est introduit dans la boîte (19), via une des ouvertures (36 ou 37), jusqu'entre les engrenages à traction (23) ou (23') - qui se trouvent entre ce ressort de traction (39) - et les engrenages à pression (32) et (33) - qui compriment le ressort de traction (39).

Ainsi, le ressort de traction (39) est coincé entre, d'une part, les engrenages à traction (23), (23') et d'autre part, les engrenages à pression (32), (33). Par la fixation sur le ressort à lames (31) et par le ressort à spirale dans le tube (30), ces engrenages à pression (32) et (33) sont installés de manière élastique et exercent une pression constante sur le ressort de traction (39). Le ressort de raction (39) est tiré vers l'avant, lorsque les engrenages à traction (23), (23') sont actionnés par le pignon (22). Le ressort de traction (39) quitte la boîte (19) par l'ouverture opposée (36) ou (37).

A la hauteur d'une des ouvertures (36) ou (37), un dispositif de détection connu (40) est installé. Celui-ci arrête le moteur au moment où l'extrémité du ressort de traction (39) s'y présente. A cette fin, le ressort de traction (39) doit avoir, proche de son extrémité, une indication ou un moyen détectable par le dispositif de détection (40), selon un des principes de détection connus.

Pour introduire le ressort de traction (39) entre les engrenages à traction (22), (23) et les engrenages à pression (32) et (33), la poignée (28) est poussée vers le haut de sorte que le couvercle (24) tourne vers le haut autour de l'axe (25). Ainsi, la pression des engrenages à pression (32), (33) sur les engrenages à tirer (23) et (23') est diminuée, ce qui facilite l'introduction du ressort de traction, en particulier lorsqu'il y a un épaississement à l'extrémité du ressort à traction (39). Une fois que le ressort de traction est serré entre les engrenages respectifs (23), (23') et (32), (33), le couvercle (24) est redescendu par la poignée (28). Le ressort de traction (39) est maintenant entraîné, aussi longtemps que le moteur actionne le pignon (22).

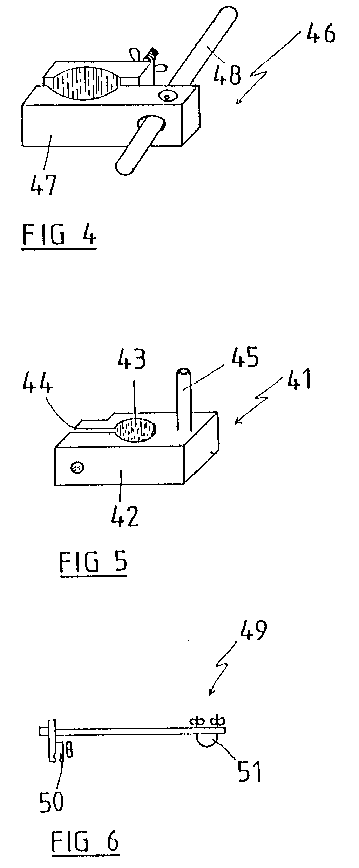

L'appareil de traction (17) est fixé près du tube à câbler, de préférence au pilier butant (1) à l'aide d'une vis de serrage (41) (voir figure 5). Cette vis (41) est composée d'une pièce de serrage (42) à ouverture cylindrique (43) qui débouche d'un côté sur une rainure (44) - laquelle traverse verticalement la pièce de serrage - dans un des flancs. Perpendiculairement à cette rainure (44), des ouvertures sont prévués à travers la pièce (42), pour qu'un boulon ou autre moyen semblable sur lequel un écrou ailé ou autre moyen semblable puisse être serre. le pilier butant (1) se trouve dans l'ouverture cylindrique (43). En resserrant l'écrou, la pièce de serrage (42) est serrée autour du tube cylindrique du pilier butant (1) à une hauteur réglable.

Perpendiculairement à la partie plate de la pièce de serrage (42), il y a un tenon cylindrique (45) orienté vers le haut. Le manchon vertical (21) de l'appareil de traction est glissé sur ce tenon (45). De cette façon, l'appareil de traction est fixé près d'un tube à câbler.

Une potence (46) peut être attachée au pilier butant (1), à hauteur réglable (voir figure 4). Cette potence se compose, outre une pièce de serrage (47) telle que décrite ci-dessus, d'un tube déplaçable (48) attaché horizontalement. La pièce de serrage (47) est attachée au pilier butant (1) à une hauteur réglable, alors qu'il est possible de déplacer le tube (48) dans son ouverture d'attache de la pièce de serrage (47) et de l'ajuster dans toute position. Cette potence (46) est destinée à être placée en même temps que le tube (48) contre un mur ou autre élément fixe de construction du bâtiment, tout en s'étendant vers le tube à câbler dans le but de donner un support supplémentaire au pilier butant (1) de sorte que les forces de réaction puissent être mieux absorbées suite à la traction des câbles.

Un étrier pour tubes (49) peut également être attaché à hauteur réglable au pilier butant (1) (figure 6). Ce étrier (49) se compose, outre les moyens (50) de fixation à hauteur réglable sur le pilier butant (1), d'une pièce d'encastrement (51) pour l'exptrémité du tube à câbler.

L'étrier pour tubes (49) est employé lorsque l'extrémité du tube dans lequel les câbles sont tirés n'est pas fixé définitivement.

En attachant cette extrémité du tube dans l'étrier pour tubes (49), l'extrémité est fixée par rapport au pilier butant (1). Ainsi, il est évité que le tube se plie vers l'apareil de traction (17) par la force de traction exercée sur les câbles qui sortent de cette extrémité du tube et qui sont tirés vers l'appareil de traction (17).

Enfin, il peut arriver qu'il soit impossible d'installer le pilier butant près du tube à câbler. Alors les moyens de fixation connus sont utilisés. Ils sont équipés d'un tenon pour suspendre l'appareil de traction (17) avec son manchon (21) près du tube à câbler. Ces moyens sont attachés à un élément fixe du bâtiment près du tube à câbler. Le manchon de l'appareil de traction est glissé sur le tenon.

Un élément supplémentaire du dispositif selon l'invention consiste en un tube flexible, d'une part, fixé en face d'une des ouvertures (36) ou (37) de l'appareil de traction (17), et d'autre part, déplaçable dans le tube à câbler.

Le procédé selon l'invention est caractérisé en premier lieu par le fait que le pilier butant (1) est installé près du tube à câbler, ensuite que la vis de serrage (41) est placée à la bonne hauteur et que l'appareil de traction (17) y est suspendu. Cette hauteur est de nature à ce que la ligne de connexion entre la sortie de tube et la vis de serrage (41) se trouve plus ou moins dans le prolongement du tube à câbler et ne forme en aucun cas un angle aigu avec la direction de ce tube. Ensuite, l'appareil de traction (17) est suspendu à la vis de serrage (41). Le ressort de traction (39) est introduit dans la boîte (19) de l'appareil de traction (17) par une des ouvertures (36) ou (37), jusqu'à ce qu'il soit serré entre les engrenages à traction (23), (23') et les engrenages à pression (32) et (33). Ceci se produit en levant la poignée et en branchant le moteur progressivement dans la direction qui permet de tirer le ressort de traction (39) dans la boîte (19). Ensuite, un tube flexible est fixé en face de l'ouverture (36) ou (37) par où le ressort de traction (39) sort de la boîte (19) et de l'entrée du tube à câbler. La boîte (19) peut maintenant être ajustée définitivement par rapport à la boîte (18) en plaçant la broche de bocage (19) dans une des ouvertures (18') forcées dans le côté de la boîte (18). Le moteur est alors branché, de sorte que le ressort de traction est poussé dans le tube à câbler par le tube flexible. La personne qui effectue le travail, se met alors, la commande à distance en main, à l'autre extrémité du tube à câbler et arrête le moteur de l'appareil de traction (17) au moment où le ressort de traction y apparaît. Les câbles conducteurs sont reliés à cette extrémité du ressort de traction (39). Le moteur de l'appareil de traction (17) est branché dans le sens opposé par la commande à distance. Le ressort de traction (39) est retiré du tube dans la direction de l'appareil de traction et emmène les câbles conducteurs. La personne qui exécute le traveil enfonce les câbles dans le tube pendant que l'appareil de traction (17) tire sur le ressort de traction - et donc les câbles - à l'autre bout du tube. Le dispositif de détection (40) arrête le moteur lorsque les câbles sortent du tube près de l'appareil de traction (17). Les câbles sont détachés du ressort de traction (39). Le travail est alors terminé. Le pilier butant (1) peut être rapidement et facilement placé près d'un autre tube. Le mode de travail selon l'invention se répétera.

Au besoin, la potence (46) et/ou l'étrier pour tubes (49) sont placés et ajustés sur le pilier butant (1). Si le pilier (1) ne peut pas être employé, la seule différence du procédé selon l'invention est la fixation de l'appareil de traction (17) - équipé de moyens de fixation d'un tenon pour le manchon (21) - à un autre élément fixe du bâtiment près du tube à câbler.

Un avantage du dispositif selon l'invention est qu'une seule personne peut câbler le tube à l'aide d'un ressort de traction.

Un autre avantage du dispositif selon l'invention est que le ressort de traction peut être enfoncé dans le tube également par l'appareil de traction.

Jusqu'à présent ceci n'était possible qu'à la main.

Encore un avantage est le fait que le pilier butant (1) peut être installé rapidement et facilement.

Un avantage supplémentaire du dispositif selon l'invention est que le moyen de traction des câbles constructeurs (le ressort de traction) peut être réutilisé.

Le dispositif selon l'invention permet donc à une seule personne de câbler un tube de façon économique, facile et rapide, ce qui était impossible avec le dispositif connu.

## Revendications

1. Dispositif pour introduire un ou plusieurs fils ou câbles dans un tube composé d'un pilier butant (1) télescopique et d'un appareil de traction (17) actionné par un moteur et attaché à ce pilier, muni d'un moyen de traction flexible, - tel qu'un fil de métal souple - lequel est glissé dans le tube et relié au(x) câble(s) afin de le(s) tirer dans le tube, caractérisé en ce que pour chaque partie télescopique (2, 3) du pilier butant il y a une borne d'assemblage (4) pour l'ajustage ferme de chaque longueur allongée, composée d'une pièce annulaire (6) située avec un faible jeu autour de la partie télescopique (2) et reliée au-dessus de l'extrémité de l'autre partie tubulaire (3) - où se trouve la partie télescopique - à cette partie (3) avec des moyens de connexion (5), qui permettent à la pièce annulaire (6) de se placer, soit, perpendiculairement à l'axe longitudinal de la partie télescopique (2), soit, en biais à l'égard de cet axe, avec les bords intérieurs de cette pièce annulaire (6) appuyant sur cette partie télescopique (2), et avec des éléments de commande qui permettent de positionner la pièce annulaire (6) le dispositif de traction (17) étant pourvu d'au moins d'une paire de rouleaux, engrenages ou moyens semblables (23, 32) et (23', 33) disposés les uns au-dessus des autres entre lesquels le moyen de traction (39) - s'étendant linéairement - peut être serré et dont au moins l'un d'entre eux peut être actionné par un moteur à l'aide d'une commande à distance afin de tirer linéairement le moyen de traction (39) à travers le dispositif de traction (17).

2. Dispositif selon la revendication 1 caractérisé en ce que la borne d'assemblage (4) est composée, d'une part, d'un cylindre creux (5) attaché à l'extrémité supérieure de la partie tubulaire inférieure (3), alors que le côté supérieur ouvert de cette partie (3) débouche à l'intérieur du cylindre (5) et que la partie tubulaire télescopique (2) peut pénétrer verticalement par une ouverture dans le côté supérieur du cylindre (5) jusque dans la partie tubulaire inférieure (3), d'autre part, d'une pièce annulaire (6) située à l'intérieur du cylindre (5) et placée autour de la partie (2) avec un faible jeu et qui déborde avec une partie élargie au travers une ouverture prévue dans la paroi du cylindre (5), pour se terminer sous la forme d'une lèvre orientée vers le bas.

3. Dispositif selon les conclusions 1 ou 2 caractérisé en ce qu'un élément élastique (15) est monté sur la pièce d'appui inférieure (10) du pilier butant (1), en supportant la partie tubulaire inférieure (3) de ce pilier butant (1) tout en permettant cette partie (3) d'être poussée verticalement vers le bas contre les forces élastiques et que la pièce d'appui (10) est pourvue d'une pièce de canalisation tubulaire (16) glissée dans cette partie tubulaire (3) en la guidant dans ses mouvements verticaux.

4. Dispositif selon la revendication 3 caractérisé en ce que perpendiculairement à la pièce d'appui (10), un tube (12) est fixé au-milieu de la pièce tubulaires (3) à travers l'ouverture d'une partie annulaire (13) fixée à l'intérieur de cette partie (3), alors que l'extrémité du tube (12) au-dessus de cette partie annulaire (13) est pourvue de moyens tels qu'une goupille d'arrêt (14), écrou, ou autre moyen empêchant le petit tube (12) de quitter l'ouverture de la partie anulaire (13), alors qu'autour du tube (12) il y a un ressort à spirale (15) plus long que ce tube (12) et qu'autour de ce ressort à spirale (15) un tube (16) est monté, attaché à la pièce d'appui (10), les mesures et le montage étant de nature à ce que le ressort à spirale (15) s'appuie sur la pièce d'appui (10) en exerçant une pression sur la partie annulaire (13) et à ce que la partie tubulaire (3) peut être decendue à la main ou avec le pied sur une certaine distance à l'encontre des forces élastiques, alors que le tube (16) pénêtre dans la partie tubulaire (3).

5. Dispositif selon une ou plusieurs des revendications précédentes 1 à 4 inclus caractérisé en ce que les rouleaux, engrenages ou moyens semblables (23, 23') actionnés par un moteur peuvent être actionnés dans les deux sens par le fait qu'un dispositif connu est prévu pour changer le sens de rotation de l'arbre (2) actionné par un moteur avec des moyens de commande annexes attachés au dispositif de traction (17) et/ou à l'émetteur de la commande à distance.

**6.** Dispositif selon une ou plusieurs des revendications précédentes 1 à 5 inclus caractérisé en ce que le moyen de traction (39) est serré entre une ou plusieurs paires d'engrenages (23, 33), (23', 33) montée(s) deux à deux sur des axes parallèles, verticalement l'une au-dessus de l'autre, et travaillant ensemble, alors que de chaque paire d'engrenages, un engrenage (23, 23') - l'engrenage de traction - peut être actionné directement ou indirectement par un moteur, et que l'autre engrenage (32, 33) - l'engrenage à pression - est monté verticalement et de façon élastique sur un élément élastique (31) de sorte qu'il est poussé vers l'engrenage de traction correspondant.

**7.** Dispositif selon la revendication 6, caractérisé en ce que tous les engrenages (23, 23', 32, 33) ont sur tout leur contour une cannelure (38) passant au milieu de toutes les dents, chaque dent ayant un segment suffisant à gauche et à droite de la cannelure (38) pour que chaque engrenage à traction (33) (23') puisse saisir ces segments de dent sur les segments de dent correspondants de l'engrenage à pression (32, 33) placé au-dessus pour actionner cet engrange à pression.

**8.** Dipositif selon une ou plusieurs des revendications précédentes 1 à 7 inclus caractérisé en ce que le dispositif de traction consiste en deux boîtes séparées (18) et (19) - reliées entre elles où la boîte (18) comprend le moteur et tous les dispositifs et moyens nécessaires à la conduite de ce dernier, ainsi que ses moyens de protection et de contrôle, et où la boîte (19) comprend le mécanisme de traction qui est actionné par l'axe (20) et où cet axe (20) sort d'une paroi de la boîte (18) du côté de la boîte (19) pour pénétrer dans celle-ci.

**9.** Dispositif selon la revendication 8 caractérisé en ce que les boîtes (18) et (19) peuvent tourner l'une par rapport à l'autre autour de l'axe (20) et que la position de la boîte (19) peut etre ajustée de manière ferme, au choix, dans une des positions possibles par rapport à la boîte (18).

**10.** Dispositif selon une des revendications 8 et 9 caractérisé en ce que la boîte (19) a un couvercle (24) pouvant tourner sur une petite distance vers le haut autour d'un axe (25) et restant en position ouverte sous la pression d'un élément élastique, la position fermée étant bloquée ou débloquée par des moyens connus alors, qu'au-dessous du couvercle (24) - au-dessous des parties intermédiaires (29, 30) qui s'étendent verticalement et sont montées verticalement de manière élastique ou non par rapport au couvercle - un ressort-à-lame horizontal (31) est attaché au-dessous duquel deux profilés support en forme de U (34, 35) sont reliés symériquement à l'égard des parties intermédiaires (29, 30), un des deux engrenages supérieurs ou moyens semblables (32), (33) étant respectivement attaché à ces profilés sur des axes, verticalement au-dessus de leurs engrenages correspondants ou moyens semblables (23), (23').

**11.** Dispositif selon une ou plusieurs des revendications 6 à 10 inclus, caractérisé en ce que le moyen de traction (39) est serré horizontalement entre les engrenage à pression (32), (33) et les engrenages à traction (23), (23') dans la cannelure (38) et qu'il est tiré horizontalement, pénétrant dans la boîte (19) par une ouverture (36) ou (37) dans sa paroi et sortant par une autre ouverture (37) ou (36) dans la paroi opposée, où le côté supérieur des engrenages enférieurs (23), (23') et les deux ouvertures (36) et (37) se trouvent sur un ligne horizontale de connexion dans le prolongement réciproque.

**12.** Dispositif selon une ou plusieurs des revendications 1 à 11 inclus caractérisé en ce que le dispositif de traction (17) est pourvu d'un dispositif de détection (40) pouvant détecter le passage d'un élément détectable attaché au moyen de traction (39) et débrancher automatiquement le moteur de ce dispositif de traction (17).

**13.** Procédé pour introduire un ou plusieurs câbles dans un tube à l'aide d'un dispositif de traction actionné par un moteur et attaché au pilier butant caractérisé en ce qu'utilisant un dispositif selon une ou plusieurs des revendications 1 à 12 le dispositif de traction (17) est utilisé dans le même montage, aussi bien pour rentrer le moyen de traction (39) dans le tube à câbler que pour l'en retirer en changeant la direction de rotation des engrenages ou moyens semblables actionnés par le moteur.

**14.** Procédé selon la revendication 13 caractérisé en ce que le pilier butant (1) est bloqué à la hauteur souhaitée en poussant vers le bas la partie tubulaire (3) à l'encontre des forces élastiques de l'élément à ressort (15) et en la lâchant ensuite de sorte que la pièce annulaire (6) se met en biais à l'égard de l'axe longitudinal de la partie télescopique (2).

FIG. 1

FIG. 2

EP 0 493 851 A1

FIG. 3a

FIG. 3b

13

FIG 4

FIG 5

FIG 6

FIG 7a

FIG 7b

15

FIG 8

FIG 9

EP 0 493 851 A1

# RAPPORT DE RECHERCHE EUROPEENNE

Office européen des brevets

Numero de la demande

EP 91 20 3309

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | FR-A-2 537 795 (G. KOHLER) <br> * page 3, ligne 26 - page 7, ligne 14; figures 1-4 * | 1,12 | H02G1/08 |
| A | FR-A-2 296 351 (MICROREX) <br> * page 3, ligne 37 - page 4, ligne 13; figures 1-3 * | 1,5 | |
| A | FR-A-2 559 625 (GATTEGNO) <br> * page 2, ligne 9 - page 3, ligne 21; figure 1 * | 1,6 | |

DOMAINES TECHNIQUES RECHERCHES (Int. Cl.5)

H02G

Le présent rapport a été établi pour toutes les revendications

| Lieu de la recherche | Date d'achèvement de la recherche | Examinateur |
|---|---|---|
| LA HAYE | 21 FEVRIER 1992 | LOMMEL A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)